Europäisches Patentamt

European Patent Office

Office européen des brevets

(11) Numéro de publication: **0 288 380 B1**

# FASCICULE DE BREVET EUROPEEN

(45) Date de publication de fascicule du brevet: **23.02.94**

(51) Int. Cl.⁵: **B01D 71/34**, B01D 69/10, B01D 71/02, B01D 69/12

(21) Numéro de dépôt: **88400958.0**

(22) Date de dépôt: **20.04.88**

---

(54) **Membrane semi-perméable organominérale et procédés pour sa fabrication.**

---

(30) Priorité: **23.04.87 FR 8705748**

(43) Date de publication de la demande:
**26.10.88 Bulletin 88/43**

(45) Mention de la délivrance du brevet:
**23.02.94 Bulletin 94/08**

(84) Etats contractants désignés:
**BE DE ES GB IT NL**

(56) Documents cités:
EP-A- 0 054 354      EP-A- 0 068 509
EP-A- 0 175 668      EP-A- 0 183 989
EP-A- 0 250 327      WO-A-86/01425
WO-A-86/06294        DE-A- 1 937 960
FR-A- 2 080 241      FR-A- 2 147 269
FR-A- 2 575 398      FR-A- 2 575 459
GB-A- 1 593 127      JP-A-59 206 008
US-A- 4 137 137      US-A- 4 595 707
US-H- 276 993

(73) Titulaire: **COMMISSARIAT A L'ENERGIE ATO-MIOUE**
**31/33, rue de la Fédération**
**F-75015 Paris Cédex 15(FR)**

(72) Inventeur: **Berardo, Michel**
**6, rue Victor Hugo**
**F-30150 Roquemaure(FR)**
Inventeur: **Darnez, Charles**
**30, rue Pierre Curie**
**F-33200 Bordeaux Cauderan(FR)**
Inventeur: **Martinet, Jean-Marie**
**Rue du Général Pau - Le Jabron 2**
**F-26200 Montélimar(FR)**
Inventeur: **Roche, Gilbert**
**11 Bis, Avenue du Maréchal Juin**
**F-07700 Bourg Saint Andeol(FR)**

(74) Mandataire: **Mongrédien, André et al**
**c/o BREVATOME**
**25, rue de Ponthieu**
**F-75008 Paris (FR)**

---

Rank Xerox (UK) Business Services
(3.10/3.09/3.3.3)

## Description

L'invention a pour objet la réalisation de membranes organominérales semi-perméables et sélectives, utilisables notamment en osmose inverse.

Les membranes des installations d'osmose inverse doivent non seulement être perméables et sélectives, mais aussi présenter une grande robustesse vis-à-vis des contraintes mécaniques, thermiques et chimiques auxquelles elles sont soumises au cours de leur utilisation.

De plus, la plupart des procédés de séparation par osmose inverse exigent l'emploi de membranes de très faible épaisseur pour obtenir une perméabilité élevée, qui soient, par ailleurs, capables de résister aux hautes pressions auxquelles elles sont soumises, particulièrement dans le cas du traitement de solutions fortement concentrées.

Jusqu'à présent les membranes d'osmose inverse étaient généralement réalisées en matériau organique, par exemple en polyméthacrylate de méthyle comme il est décrit dans le brevet américain US-A-4 439 322 , ou en d'autres polymères tels que l,acétate de cellulose, les polyoléfines et les polymères fluorés comme il est décrit dans WO-A- 86/01425, et WO-A- 86/06294. DE-A- 1 937 960, FR-A- 2 080 241 décrivent des membranes en poly-(-fluorure de vinylidène) fonctionalisées par greffage.

On connaît aussi des membranes organiques d'osmose inverse ou d'ultrafiltration formées d'un réseau réticulé de deux polymères dont l'un est hydrophile comme il est décrit dans US-B- 276 993, FR-A- 2 147 269, EP-A- 0 054 354.

On sait aussi que des membranes organiques d'osmose inverse peuvent être disposées sur des supports poreux composites en matériau inorganique, par exemple en métal ou en céramique, comme il est décrit dans GB-A- 1 593 127, JP-A- 59 206 008.

WO 86/01425 décrit une membrane semiperméable en poly-(fluorure de vinylidène) sur support inorganique.

On connaît encore des filtres en matériau inorganique poreux recouverts d'une membrane microporeuse organique en polymère fluorocarbonée imprégnant la couche superficielle du substrat en vue de servir de filtre pour des particules fines, comme il est décrit dans FR-A- 2 575 398.

Cependant, l'utilisation de membranes organiques est limitée à des procédés d'osmose inverse ne nécessitant pas de traitements à température élevée ou en milieu agressif, comme c'est le cas par exemple pour la stérilisation à la vapeur des circuits d'osmose inverse destinés aux industries agro-alimentaires.

Par ailleurs, aucune des membranes organiques de l'art antérieur ne présente simultanément les caractéristiques voulues de porosité, de perméabilité, de résistance mécanique et de stabilité.

L'invention a précisément pour objet des membranes semi-perméables qui présentent de bonnes caractéristiques de perméabilité et de porosité tout en ayant une grande résistance mécanique et une bonne stabilité à des températures supérieures à 100°C.

Ces objectifs sont atteints selon l'invention en utilisant une membrane semi-perméable organominérale qui comprend un support poreux inorganique revêtu d'une couche organique semi-perméable, le support comprenant un substrat macroporeux en matériau inorganique revêtu d'une couche microporeuse en matériau inorganique, caractérisé en ce que la couche microporeuse en matériau inorganique a un rayon moyen de pores inférieur à 10nm, et en ce que la couche organique semi-perméable est une couche dense à base d'un polymère ou copolymère de fluorure de vinylidène comportant des groupements fonctionnels conférant à la membrane une perméabilité sélective à l'eau, et ayant une épaisseur de 0,01 à 1 $\mu$m.

Le polymère utilisé dans l'invention est un homopolymère de fluorure de vinylidène ou un copolymère de fluorure de vinylidène ; dans ce dernier cas, le copolymère contient généralement au moins 95% de fluorure de vinylidène.

On peut toutefois utiliser aussi dans l'invention des copolymères de fluorure de vinylidène comportant moins de 95% de fluorure de vinylidène.

Le support poreux en matériau inorganique peut se présenter sous la forme d'une plaque, d'un tube, d'un élément modulaire percé de canaux ou sous toute autre forme appropriée à l'utilisation à laquelle il est destiné.

Conformément à l'invention, le support poreux est un support composite pour obtenir les caractéristiques mécaniques souhaitées, notamment une résistance aux contraintes supérieures à 10 MPa, et pouvoir lui associer une couche organique de très faible épaisseur. Ainsi, le support poreux en matériau inorganique comprend un substrat macroporeux en matériau inorganique revêtu d'une couche microporeuse en matériau inorganique. Ceci permet d'obtenir sur la surface du support poreux qui sera recouverte de la couche organique, des pores de dimensions très faibles, ayant un rayon moyen de pores inférieur à 10 nm ; ainsi, on améliore l'adhérence et la résistance mécanique de la couche organique déposée sur le support poreux.

Dans ce support poreux, le substrat macroporeux peut être en matériau inorganique choisi dans le groupe comprenant les oxydes métalliques tels que l'alumine, les métaux, les carbures métalliques, le carbure de silicium et le carbone, et la couche microporeuse peut être réalisée en oxyde ou hydroxyde métallique, simple ou mixte. Généralement ces oxydes ou hydroxydes sont formés à partir de métaux tels que l'aluminium, le zirconium, le titane et le silicium. A titre d'exemple, on peut utiliser l'alumine ou les spinelles d'aluminium.

Dans la membrane organominérale de l'invention, on améliore les propriétés de la couche organique à base de polymère ou copolymère de fluorure de vinylidène en utilisant un polymère ou copolymère portant des groupements fonctionnels. Ceci peut être obtenu en réalisant la membrane avec un polymère ou copolymère comportant des chaînes macromoléculaires greffées portant des groupements fonctionnels conférant à la membrane une perméabilité sélective à l'eau, par exemple des groupements fonctionnels hydrophiles pour la rendre perméable à l'eau.

Ces chaînes macromoléculaires peuvent être réalisées par greffage de monomères éthyléniquement insaturés comportant des groupes fonctionnels. On peut aussi fonctionnaliser les chaînes macromoléculaires après greffage en fixant sur celles-ci des groupements fonctionnels, par exemple des groupements sulfoniques, pour rendre la couche organique hydrophile.

On peut aussi réaliser selon l'invention une membrane organominérale comportant des groupements fonctionnels sans utiliser un polymère ou copolymère greffé. Dans ce cas, la couche organique est constituée d'un copolymère de fluorure de vinilydène comportant des groupements fonctionnels conférant à la membrane une perméabilité sélective à l'eau, par exemple un copolymère de fluorure de vinylidène et d'un monomère comportant de tels groupements.

Le copolymère comportant ces groupements fonctionnels peut être obtenu directement en choisissant pour la réalisation du copolymère un monomère comportant des groupements fonctionnels, par exemple un monomère hydrophile comme l'acide acrylique, l'acide méthacrylique, l'hydroxyéthyl acrylate de méthyle et l'acide vinyl benzénique. On peut aussi préparer d'abord un copolymère de fluorure de vinylidène et d'un monomère capable d'être fonctionnalisé puis introduire ensuite les groupements fonctionnels sur le copolymère, par exemple copolymériser du fluorure de vinylidène et du styrène et soumettre ensuite le copolymère obtenu à un traitement de chlorosulfonation.

L'invention a également pour objet deux procédés de fabrication d'une membrane organominérale présentant les caractéristiques précitées.

Le premier procédé comprend les étapes suivantes :

a) soumettre un support poreux en matériau inorganique comprenant un substrat macroporeux en matériau inorganique revêtu d'une couche microporeuse en matériau inorganique ayant un rayon moyen de pores inférieur à 10nm, à un traitement permettant de réduire la pénétration d'une solution ou d'une suspension dans la porosité de la couche microporeuse de matériau inorganique, et

b) mettre en contact la couche microporeuse du support poreux avec une solution ou une suspension d'un polymère ou copolymère de fluorure de vinylidène pour déposer sur la couche microporeuse du support poreux une couche de la solution ou de la suspension,

c) sécher la couche de solution ou de suspension ainsi déposée pour former sur cette couche microporeuse du support poreux une couche organique de 0,01 à 1 um d'épaisseur à base de polymère ou copolymère de fluorure de vinylidène,

d) greffer sur la couche organique de polymère ou copolymère au moins un monomère comportant au moins une fonction éthyléniquement insaturée, et

e) soumettre ensuite la couche organique de polymère greffé à un traitement de fonctionnalisation pour introduire sur les monomères greffés des groupements fonctionnels conférant à la couche une perméabilité sélective à l'eau.

Comme on l'a vu précédemment, le support poreux est constitué par un substrat macroporeux revêtu d'une couche inorganique microporeuse afin de faciliter le dépôt d'une couche de polymère ou copolymère de fluorure de vinylidène d'épaisseur très faible. Ce support poreux composite peut être réalisé par des procédés classiques. Ainsi, lorsque la couche microporeuse est en oxyde métallique simple ou mixte, par exemple en alumine ou en spinelle d'aluminium, on peut déposer cette couche microporeuse sur un support macroporeux inorganique en utilisant les procédés décrits dans les brevets français FR-A-2 550 953, FR-A-2 575 459 et FR-A-2 575 396. Ces procédés permettent en particulier de déposer des couches microporeuses céramiques très perméables, de faible épaisseur, par exemple d'épaisseur inférieure à 1 $\mu$m, qui comportent des pores réguliers et bien répartis dont le rayon moyen de pores peut atteindre le niveau de 2 nm. L'utilisation d'une telle texture sur la face du support poreux qui sera revêtu de la couche de polymère halogénocarboné permet ainsi de réaliser des revêtements organiques extrêmement minces, par exemple d'épaisseur inférieure à 0,1 $\mu$m, qui sont mécaniquement très résistants aux contraintes de pression couramment appliquées dans les procédés de séparation par osmose inverse.

En effet, la contrainte que subit une pellicule organique fixée à l'orifice d'un pore varie sensiblement comme le rapport du rayon de ce pore à l'épaisseur du film. On ne peut donc diminuer l'épaisseur du film sans accroître la contrainte mécanique qu'il subit, sauf si l'on abaisse en même temps et dans la même proportion la dimension des pores sous-jacents. C'est pourquoi, dans l'invention, l'utilisation d'une couche microporeuse inorganique ayant les caractéristiques définies ci-dessus, en particulier un rayon de pores moyen de moins de 10 nm, permet de diminuer, sans risque de ruptures, l'épaiseur de la couche organique en polymère ou copolymère de fluorure de vinylidène au niveau de quelques centièmes de micromètres et d'accroître par conséquent de façon importante sa perméabilité.

En effet, des films commerciaux en polyfluorure de vinylidène ayant une épaisseur de 25 à 50 $\mu$m qui ont été fonctionnalisés par radiogreffage, ont une permabilité ne dépassant pas 10-20 l/j.m$^2$ alors que des couches fonctionnalisées conformes à l'invention ont des perméabilités bien supérieures, dépassant 100-200 l/j.m$^2$.

Une couche aussi mince de bonne qualité est difficile à déposer sur un substrat macroporeux à cause de sa rugosité trop élevée, car il y a risque de défauts locaux. En revanche, lorsque le substrat macroporeux est revêtu d'une couche microporeuse inorganique ayant les caractéristiques définies ci-dessus, c'est-à-dire une rugosité de surface très faible, on peut éviter ces risques de défauts.

Comme on l'a vu précédemment, cette sous-couche doit avoir un rayon de pore moyen très faible afin de mieux supporter la couche mince et de lui permettre de résister aux contraintes de pression intervenant dans un procédé d'osmose inverse.

Le dépôt d'un film organique à partir d'une solution de polymère s'accompagne nécessairement d'une pénétration de la solution, - donc du polymère - au sein de la porosité de cette sous-couche minérale microporeuse en raison des forces capillaires (dont les effets sont accrus dans le cas de micropores : loi de Jurin).

Cependant, une pénétration de polymère dans cette microporosité est néfaste : elle réduit la perméabilité et, de plus, au moment de l'hydratation de la membrane, le passage de l'eau dans la matrice polymère s'accompagne d'un gonflement qui peut provoquer des éclatements locaux de l'apprêt microporeux, donc une dégradation de la membrane.

Il est donc nécessaire de neutraliser l'action capillaire de la miroporosité de la sous-couche pour éviter toute pénétration de polymères dans les pores et cela peut être réalisé en bouchant, temporairement ces pores par un produit soluble éliminable, une fois achevée la préparation de la membrane organominérale.

C'est grâce à l'ensemble de ces dispositions (dépôt d'une sous-couche minérale microporeuse rigide, neutralisation temporaire de sa porosité) que le film organique déposé peut avoir une épaisseur extrêmement faible (d'où une perméabilité élevée), tout en conservant une grande résistance mécanique indispensable en osmose inverse et une qualité satisfaisante (absence de défauts).

Une faible épaisseur est en outre avantageuse car elle permet d'atténuer les effets de la "compaction" du film sous l'influence de la pression (un film mince se comprime moins qu'un film épais) donc de maintenir des performances plus stables au cours du temps.

Selon l'invention, la mise en contact du support poreux avec la solution ou la suspension de polymère ou copolymère peut être effectuée par tout moyen classique. On peut en particulier utiliser la technique d'engobage qui, dans le cas d'un support poreux tubulaire, peut consister à mettre en communication l'intérieur du support poreux tubulaire avec un bac contenant la suspension ou la solution de polymère halogénocarboné ; le bac est muni d'une membrane déformable qui permet sous l'influence de la pression d'un fluide, d'engendrer des variations de volume à l'intérieur du bac, ce qui provoque la montée ou la descente de la solution ou de la suspension à l'intérieur du support poreux tubulaire.

Le liquide utilisé comme milieu liquide de la solution ou de la suspension est choisi de façon à obtenir une couche organique semi-perméable qui ne pénètre que très peu dans les pores du support poreux inorganique. En effet, les propriétés rhéologiques et superficielles de la suspension ou de la solution conditionnent l'attraction capillaire du liquide par les pores ouverts du support poreux, et ce phénomène est à l'origine de la formation de la couche. Cependant, l'une des difficultés rencontrées lorsque l'on réalise un tel dépôt sur un support poreux, réside dans la possibilité de faire pénétrer le polymère ou copolymère dans la porosité interne du support poreux inorganique, ce qui est préjudiciable à la perméabilité de la membrane.

Pour réduire cette pénétration dans le support poreux, on peut modifier convenablement la mouillabilité des parois des pores du support poreux inorganique, par exemple par imprégnation préalable de ce support poreux à l'aide d'un agent tensioactif. On peut aussi limiter l'attraction capillaire des pores du support poreux inorganique sur le liquide de la solution ou de la suspension en diminuant temporairement le volume poreux accessible du support poreux par introduction d'une quantité contrôlée d'un solvant approprié tel que le diméthylformamide ou l'eau. Cette méthode permet également de limiter l'épaisseur de la couche de polymère halogénocarboné à une valeur très faible qui peut être inférieure au 1/10 de $\mu$m.

Selon une variante, pour éviter cette pénétration de la couche de polymère dans les pores du support poreux inorganique, on commence par boucher la porosité superficielle du support poreux inorganique avec un produit qui pourra être éliminé ensuite par dissolution dans un solvant approprié, après dépôt et séchage de la couche de polymère. Ce produit peut être en particulier un sel minéral hydrosoluble, par exemple le chlorure de sodium.

Après dépôt sur le support poreux de la couche de solution ou de suspension de polymère ou copolymère, on soumet celle-ci à un séchage qui peut être réalisé à la température ambiante et complété par un traitement thermique effectué à une température inférieure à la température de ramollissement du polymère. Généralement, dans le cas du polyfluorure de vinylidène, les températures utilisées pour ce traitement thermique se situent dans la gamme allant de 100 à 150°C et la durée de ce traitement peut aller de 30 min. à 1 h.

Lorsque la couche organique est constituée de polymère ou copolymère modifié par greffage, le greffage peut être réalisé soit avant le dépôt de la couche organique, soit après le dépôt de la couche organique de polymère ou copolymère. De préférence, le greffage est réalisé par voie radiochimique au moyen de rayonnements ionisants et les monomères utilisés sont des monomères comportant au moins une fonction éthyléniquement insaturée.

Les rayonnements ionisants susceptibles d'être utilisés sont les rayonnements ultraviolets, les rayonnements bêta, les rayonnements gamma, les faisceaux d'électrons accélérés et les rayons X. Généralement, on emploie les rayonnements gamma provenant d'une source de cobalt 60 et des doses de rayonnements situées dans la gamme allant de 50 Krad à 5Mrad.

Les monomères utilisés sont choisis de préférence dans le groupe comprenant l'acrylamide, l'acrylamine, le styrène, le divinylbenzène, les vinylpyridines, la N-vinylpyrrolidone, la N-vinylcaprolactone, des acides insaturés tels que l'acide vinylacétique, l'acide vinylsulfonique et l'acide acrylique, les esters d'acides insaturés, les éthers allyliques comme l'allylglycidyl éther, et leurs dérivés.

Lorsque l'on effectue le greffage par voie radiochimique après dépôt de la couche organique, on peut réaliser celui-ci en soumettant le support revêtu de la couche de polymère ou copolymère à une irradiation au moyen de rayonnements ionisants, et en mettant en contact la couche organique ainsi irradiée avec les monomères à greffer, soit pendant, soit après l'irradiation.

Pour répondre à des contraintes particulières, d'ordre technologique par exemple, le greffage peut être limité à certaines zones en interposant, durant la phase d'irradiation, des écrans absorbants (en plomb par exemple) de forme et d'épaisseur appropriées sur les parties à réserver.

L'irradiation préalable de la couche organique a pour effet de créer des sites réactifs au sein de la matrice du polymère déposé. Lorsqu'on met ensuite cette couche irradiée en contact avec les monomères à greffer à l'état pur ou en solution dans un solvant, par exemple en immergeant la couche organique irradiée dans une solution des monomères dans un solvant organique ou un mélange de solvants organiques appropriés, on obtient un greffage des monomères sur les sites réactifs de la matrice polymère.

On peut greffer simultanément plusieurs monomères différents ou greffer successivement plusieurs monomères différents. On peut aussi utiliser comme monomères de greffage des monomères comportant plusieurs fonctions éthyléniquement insaturées, ce qui permet d'assurer une réticulation partielle de la couche de polyfluorure de vinylidène.

On peut aussi réaliser le greffage en déposant sur le support poreux inorganique une couche de solution ou de suspension de polymère ou copolymère contenant les monomères à greffer et en soumettant ensuite la couche ainsi déposée à une irradiation au moyen de rayonnements ionisants pour greffer les monomères sur le polymère et provoquer simultanément une réticulation partielle de la couche, ce qui confère au film une bonne résistance mécanique.

Dans certains cas, après greffage des monomères sur la couche de polymère, on modifie celle-ci par un traitement de fonctionnalisation approprié permettant de fixer sur les monomères greffés des groupements fonctionnels, par exemple des groupements sulfoniques qui confèrent à la membrane organominérale la perméabilité souhaitée, par exemple la perméabilité à l'eau.

Lorsque le monomère de greffage est du styrène, ce traitement peut consister en une chlorosulfonation, celle-ci peut être réalisée en faisant réagir les motifs styrène fixés sur la matrice polymère avec de l'acide chlorosulfonique ou un complexe organique du trioxyde de soufre, après gonflement préalable de la couche de polymère greffé dans un solvant comme le tétrachlorure de carbone ou le dichlorométhane.

On peut aussi obtenir une couche de polymère ou copolymère greffé comportant des groupements fonctionnels appropriés, sans effectuer ce traitement complémentaire, en choisissant pour l'opération de greffage des monomères comportant les groupements fonctionnels appropriés, par exemple sulfonique, carboxylique, amine ou amide.

Selon le deuxième procédé de fabrication de l'invention, on peut encore réaliser le greffage et la fonctionnalisation du polymère ou copolymère avant le dépôt de la couche sur le support poreux. Dans ce cas, on modifie tout d'abord le polymère ou copolymère par greffage de monomères appropriés, suivi éventuellement d'une fonctionnalisation des chaînes greffées, puis on met en solution ou en suspension dans un solvant approprié le polymère ainsi modifié et on réalise ensuite comme précédemment à partir de cette solution ou de cette suspension le dépôt sur le support poreux préalablement traité comme précédemment puis le séchage de la couche organique de polymère ainsi modifié.

Dans ce deuxième procédé de l'invention, on peut obtenir directement la fonctionnalisation lors du greffage, en choisissant des monomères comportant les groupements fonctionnels appropriés, comme c'est le cas par exemple de l'acide acrylique et de l'hydroxyéthyl acrylate de méthyle.

On peut aussi obtenir cette fonctionnalisation en deux étapes, en greffant un monomère capable d'être fonctionnalisé et en soumettant ensuite le polymère greffé à un traitement de fonctionnalisation.

Comme précédemment, le greffage peut être réalisé par voie radiochimique en utilisant des monomères à insaturation éthylénique tels que ceux mentionnés précédemment.

D'autres caractéristiques et avantages de l'invention apparaîtront mieux à la lecture des exemples suivants donnés bien entendu à titre illustratif et non limitatif.

EXEMPLE 1 : Préparation d'une membrane organominérale en alumine recouverte d'une couche de polyfluorure de vinylidène greffé par du styrène chlorosulfoné.

On prépare tout d'abord le support poreux en matériau inorganique en déposant une couche d'hydroxyde d'aluminium sur la surface interne d'un substrat tubulaire poreux en alumine de 7 mm de diamètre, préalablement revêtu d'un apprêt céramique et présentant un rayon moyen de pores de 0,8 $\mu$m. On réalise le dépôt de la couche d'hydroxyde d'aluminium par la technique d'engobage en utilisant une suspension colloïdale d'hydroxyde d'aluminium à laquelle on ajoute de l'alcool polyvinylique pour obtenir une viscosité de 25 cp. On sèche ensuite lentement la couche d'hydroxyde d'aluminium ainsi déposée puis on la soumet à un traitement thermique à 700°C pendant 45 min. On obtient ainsi une couche microporeuse d'alumine ayant une épaisseur de 1 $\mu$m et un rayon moyen de pores de 6,5 nm.

On dépose ensuite sur cette couche d'alumine par la technique d'engobage une couche de polyfluorure de vinylidène en utilisant une solution de polyfluorure de vinylidène (PVDF) dans le diméthylacétamide ayant une concentration en PVDF de 1%. On sèche ensuite lentement la couche déposée, puis on la soumet à un traitement thermique à 130°C pendant 2 h. On obtient ainsi une couche organique de polyfluorure de vinylidène ayant une épaisseur de 1 $\mu$m.

On soumet alors le support tubulaire ainsi revêtu à l'action des rayonnements gamma provenant d'une source de cobalt 60 dans les conditions suivantes :
- débit de dose : 50 krad/h,
- dose moyenne : 500 krad.

Après irradiation, on monte le support tubulaire dans un circuit parcouru par un courant de styrène désaéré, maintenu à 60°C, et on fait circuler le styrène en contact avec le support pendant 2 h. On interrompt alors le courant de styrène et on le remplace par une solution à 10% en volume d'acide chlorosulfonique dans du tétrachlorure de carbone ou du chlorure de méthyle que l'on met en circulation à la température ambiante pendant une heure.

Le taux de greffage du styrène exprimé en % pondéral, c'est-à-dire selon la formule :

$$\frac{P_1 - P_0}{P_0} \times 100$$

avec $P_1$ représentant le poids du support après greffage et $P_0$ le poids du support avant greffage, atteint 10%.

La quantité de groupes chlorosulfoniques fixés sur le polyfluorure de vinylidène est de 6% du polymère fluoré.

On utilise ensuite la membrane ainsi obtenue dans une installation d'osmose inverse où la solution à traiter est une solution aqueuse contenant 3% en poids de chlorure de sodium. Avant de monter la membrane dans l'installation, on soumet celle-ci à un traitement de gonflement à l'eau chaude, et on réalise ensuite l'osmose inverse en faisant circuler la solution à l'intérieur des tubes sous une pression de 4MPa. Dans ces conditions, la capacité de rétention de la membrane est de 94% et le débit de perméat est de 65 $l.d^{-1}.m^{-2}$.

EXEMPLE 2 : préparation d'une membrane organominérale en alumine recouverte d'une couche de polyfluorure de vinylidène greffé par du styrène et chlorosulfoné.

On utilise le même substrat tubulaire poreux que dans l'exemple 1 et on dépose sur la surface interne de celui-ci une couche d'hydroxyde d'aluminium en utilisant la technique d'engobage comme dans l'exemple 1. On sèche ensuite lentement la couche d'hydroxyde d'aluminium, puis on la soumet à un traitement thermique à 600°C pendant 45 min. On obtient ainsi une couche microporeuse d'alumine ayant une épaisseur de 1 μm et un rayon moyen de pore de 4,5 nm.

Avant de déposer le polyfluorure de vinylidène sur cette couche d'alumine, on imprègne le substrat poreux de diméthylformamide pour favoriser le dépôt de polyfluorure de vinylidène sur la surface externe de la couche d'alumine. On réalise ensuite le dépôt de la couche de polyfluorure de vinylidène en mettant en contact, pendant 1 min, la surface interne du substrat tubulaire revêtu de la couche microporeuse d'alumine avec une solution de polyfluorure de vinylidène (PVDF) dans le diméthylformamide ou le diméthylacétamide ayant une concentration en PVDF de 0,3%. On sèche ensuite lentement la couche déposée, puis on la soumet à un traitement thermique à 130°C pendant deux heures. On obtient ainsi une couche organique de polyfluorure de vinylidène ayant une épaisseur de 0,2 μm.

On soumet alors le support tubulaire ainsi revêtu à l'action des rayonnements gamma provenant d'une source de cobalt 60 dans les conditions suivantes :

- débit de dose : 50 krad/h,
- dose moyenne : 1 Mrad.

Après irradiation on greffe du styrène sur le support tubulaire ainsi traité puis on réalise un traitement de sulfonation dans les mêmes conditions que celles de l'exemple 1. On obtient ainsi un taux de greffage du styrène de 6% en poids et la quantité de groupes chlorosulfoniques est de 4%.

On conditionne la membrane ainsi obtenue dans de l'eau chaude, et on l'utilise ensuite dans une installation d'osmose inverse pour traiter une solution aqueuse ayant une concentration en sel de 3% en poids. On fait circuler la solution à l'intérieur des tubes sous une pression de 4 MPa et, dans ces conditions, le taux de rétention est de 91% pour un débit de perméat de 95 $l.d^{-1}.m^{-2}$.

EXEMPLE 3 : Préparation d'une membrane organominérale d'un substrat en alumine supportant une couche microporeuse de zircone elle-même recouverte d'un revêtement en polyfluorure de vinylidène greffé par du styrène chlorosulfoné.

On utilise le même substrat tubulaire en alumine que dans l'exemple 1 et l'on dépose sur la surface interne de celui-ci une couche d'hydroxyde de zirconium en employant la technique d'engobage comme dans l'exemple 1, mais appliquée ici à une suspension colloïdale d'hydroxyde de zirconium additionnée d'alcool polyvinylique pour obtenir une viscosité de 20 cp. On procède ensuite à un séchage lent suivi d'un traitement thermique à 650°C pendant 2 heures. On obtient ainsi une couche microporeuse de zircone ayant une épaisseur de 2 μm et un rayon de pore de 9 nm.

On imprègne alors la couche de zircone obtenue avec une solution aqueuse à 25% en poids de chlorure de sodium. Après un séchage lent suivi d'un lavage par un faible volume de méthanol, on réalise le dépôt de la couche de PVDF en mettant en contact la couche de zircone avec une solution de polyfluorure de vinylidène à 0,5% en poids dans un mélange de diméthylformamide et d'acétone.

La couche organique ainsi déposée est séchée puis soumise à un traitement thermique à 130°C pendant 2 heures.

On obtient un revêtement de polyfluorure de vinylidène ayant une épaisseur de 0,3 μm.

On procède alors à une irradiation par les rayonnements gamma puis à un greffage de styrène et à un traitement de sulfonation comme il est décrit dans l'exemple 1.

La membrane obtenue est conditionnée à l'eau chaude puis disposée dans un circuit d'osmose inverse pour traiter une solution aqueuse ayant une concentration en sel de 3%. Sous une pression de 4 MPa, le taux de rétention est de 90% pour un débit de perméat de 130 $ld^{-1}m^{-2}$.

**Revendications**

1. Membrane semi-perméable organominérale comprenant un support poreux inorganique revêtu d'une couche organique semi-perméable, le support comprenant un substrat macroporeux en matériau inorganique revêtu d'une couche microporeuse en matériau inorganique, caractérisée en ce que la couche microporeuse en matériau inorganique a un rayon moyen de pores inférieur à 10nm, et en ce que la couche organique semi-perméable est une couche dense à base d'un polymère ou copolymère de fluorure de vinylidène comportant des groupements fonctionnels conférant à la membrane une perméabilité sélective à l'eau, et ayant une épaisseur de 0,01 à 1 μm.

2. Membrane selon la revendication 1, caractérisée en ce que le substrat macroporeux est en un matériau inorganique choisi dans le groupe comprenant les oxydes métalliques, les métaux, les carbures métalliques, le carbure de silicium et le carbone, et en ce que la couche microporeuse est réalisée en oxyde ou hydroxyde métallique, simple ou mixte.

3. Membrane selon l'une quelconque des revendications 1 et 2, caractérisée en ce que le polymère ou copolymère de fluorure de vinyli-dène comporte des chaînes macromoléculai-res greffées portant lesdits groupements fonctionnels.

4. Membrane selon la revendication 3, caractérisée en ce que la couche organique est constituée de polymère ou copolymère de fluorure de vinylidène greffé par du styrène comportant des groupes chlorosulfoniques ou sulfonés.

5. Membrane selon l'une quelconque des revendications 1 et 2, caractérisée en ce que la couche organique est constituée d'un copolymère de fluorure de vinylidène portant des groupements fonctionnels conférant à la membrane une perméabilité sélective à l'eau.

6. Procédé de préparation d'une membrane semi-perméable organominérale selon l'une quelconque des revendications 1 à 4, caractérisé en ce qu'il comprend les étapes suivantes :

   a) soumettre un support poreux en matériau inorganique comprenant un substrat macroporeux en matériau inorganique revêtu d'une couche microporeuse en matériau inorganique ayant un rayon moyen de pores inférieur à 10nm, à un traitement permettant de réduire la pénétration d'une solution ou d'une suspension dans la porosité de la couche microporeuse de matériau inorganique,
   b) mettre en contact la couche microporeuse du support poreux avec une solution ou une suspension d'un polymère ou copolymère de fluorure de vinylidène pour déposer sur la couche microporeuse du support poreux une couche de la solution ou de la suspension,
   c) sécher la couche de solution ou de suspension ainsi déposée pour former sur cette couche microporeuse du support poreux une couche organique de 0,01 à 1 $\mu$m d'épaisseur à base de polymère ou copolymère de fluorure de vinylidène,
   d) greffer sur la couche organique de polymère ou copolymère au moins un monomère comportant au moins une fonction éthyléniquement insaturée, et
   e) soumettre ensuite la couche organique de polymère greffé à un traitement de fonctionnalisation pour introduire sur les mono-mères greffés des groupements fonction-nels conférant à la couche une perméabilité sélective à l'eau.

7. Procédé selon la revendication 6, caractérisé en ce que le monomère est choisi dans le groupe comprenant l'acrylamide, l'acrylamine, le styrène, le divinyl benzène, les vinylpyridines, la N-vinylpyrrolidone, la N-vinylcaprolactone, l'acide vinylacétique, l'acide vinylsulfonique, l'acide acrylique, les éthers allyliques, et leurs dérivés.

8. Procédé selon l'une quelconque des revendications 6 et 7, caractérisé en ce que l'on réalise le greffage par voie radiochimique.

9. Procédé selon la revendication 8, caractérisé en ce que l'on réalise le greffage en soumettant le support revêtu de la couche de polymère ou copolymère à une irradiation au moyen de rayonnements ionisants, et en mettant en contact la couche organique ainsi irradiée avec les monomères à greffer soit pendant, soit après l'irradiation.

10. Procédé selon l'une quelconque des revendications 6 à 8, caractérisé en ce que l'on dépose sur la couche microporeuse du support traité dans l'étape a), une couche de solution ou de suspension de polymère ou copolymère contenant les monomères à greffer et en ce que l'on soumet ensuite la couche ainsi déposée à une irradiation au moyen de rayonnements ionisants pour greffer les monomères sur le polymère ou copolymère et provoquer simultanément une réticulation partielle de la couche.

11. Procédé selon la revendication 6, caractérisé en ce que le monomère de greffage étant le styrène, le traitement de fonctionnalisation est un traitement de chlorosulfonation.

12. Procédé de préparation d'une membrane semi-perméable organominérale selon l'une quelconque des revendications 1 à 5, caractérisé en ce qu'il comprend les étapes suivantes :

   a) soumettre un support poreux en matériau inorganique comprenant un substrat macroporeux en matériau inorganique revêtu d'une couche microporeuse en matériau inorganique ayant un rayon moyen de pores inférieur à 10nm, à un traitement permettant de réduire la pénétration d'une solution ou d'une suspension dans la porosité de la couche microporeuse de matériau inorganique,
   b) mettre en contact la couche microporeuse du support poreux avec une solution ou une suspension d'un polymère ou copolymère de fluorure de vinylidène comportant des groupements fonctionnels, pour déposer sur cette couche microporeuse une couche de la solution ou de la suspension, et

c) sécher la couche de solution ou de suspension ainsi déposée pour former sur cette couche microporeuse du support poreux une couche organique à base de polymère ou copolymère de fluorure de vinylidène de 0,01 à 1 μm d'épaisseur comportant des groupements fonctionnels conférant à la couche une perméabilité sélective à l'eau.

13. Procédé selon la revendication 12, caractérisé en ce que le polymère ou copolymère comportant les groupements fonctionnels est obtenu par greffage d'un monomère comportant des groupements fonctionnels.

14. Procédé selon la revendication 12, caractérisé en ce que le polymère ou copolymère comportant des groupements fonctionnels est obtenu en greffant sur un polymère ou copolymère de fluorure de vinylidène un monomère capable d'être fonctionnalisé et en soumettant ensuite le polymère ou copolymère greffé ainsi obtenu à un traitement pour introduire les groupements fonctionnels sur le monomère greffé.

15. Procédé selon la revendication 12, caractérisé en ce que le copolymère comportant des groupements fonctionnels est un copolymère de fluorure de vinylidène et d'un monomère comportant des groupements fonctionnels.

## Claims

1. Organomineral semipermeable membrane incorporating an inorganic porous support coated with a semipermeable organic layer, the support incorporating an inorganic material macroporous substrate coated with an inorganic material microporous layer, characterized in that the inorganic material microporous layer has a mean pore radius below 10nm and in that the semipermeable organic layer is a dense layer based on a vinylidene fluoride polymer or copolymer having functional groups giving the membrane a water-selective permeability and having a thickness of 0.01 to 1 μm.

2. Membrane according to claim 1, characterized in that the macroporous substrate is an inorganic material chosen from within the group including metal oxides, metals, metal carbides, silicon carbide and carbon and in that the microporous layer is formed from single or mixed metal oxide or hydroxide.

3. Membrane according to any one of the claims 1 to 2, characterized in that the vinylidene fluoride polymer or copolymer has grafted macromolecular chains carrying said functional groups.

4. Membrane according to claim 3, characterized in that the organic layer is formed from vinylidene fluoride polymer or copolymer grafted by styrene having chlorosulphonic or sulphonated groups.

5. Membrane according to any one of the claims 1 to 2, characterized in that the organic layer is constituted by a vinylidene fluoride copolymer carrying functional groups giving the membrane a water-selective permeability.

6. Process for the preparation of an organomineral semipermeable membrane according to any one of the claims 1 to 4, characterized in that it comprises the following stages:

a) subjecting an inorganic material porous support incorporating an inorganic material macroporous substrate coated with an inorganic material microporous layer having a mean pore radius below 10nm, to a treatment making it possible to reduce the penetration of a solution or a suspension into the pores of the inorganic material microporous layer and

b) contacting the microporous layer of the porous support with a solution or a suspension of a vinylidene fluoride polymer or copolymer in order to deposit on the microporous layer of the porous support a layer of the solution or suspension,

c) drying the layer of solution or suspension deposited in this way in order to form on said microporous layer of the porous support an organic layer having a thickness of 0.01 to 1 μm, based on vinylidene fluoride polymer or copolymer,

d) grafting on the organic polymer or copolymer layer at least one monomer having at least one ethylenically unsaturated function and

e) then subjecting the grafted organic polymer layer to a functionalization treatment in order to introduce onto the grafted monomers functional groups giving the layer a water-selective permeability.

7. Process according to claim 6, characterized in that the monomer is chosen from within the group including acrylamide, acrylamine, styrene, divinylbenzene, vinylpyridines, N-vinylpyrrolidone, N-vinylcaprolactone, vinyl acetic acid, vinyl sulphonic acid, acrylic acid, allyl ethers and their derivatives.

8. Process according to either of the claims 6 and 7, characterized in that grafting takes place radiochemically.

9. Process according to claim 8, characterized in that grafting is carried out by subjecting the support coated with the polymer or copolymer layer to irradiation by means of ionizing rays and by contacting the thus irradiated organic layer with the monomers to be grafted either during or after irradiation.

10. Process according to any one of the claims 6 to 8, characterized in that on the microporous layer of the support treated in stage a) is deposited a layer of polymer or copolymer solution or suspension containing the monomers to be grafted and in that the thus deposited layer is then subject to an irradiation by means of ionizing rays in order to graft the monomers on the polymer or copolymer and simultaneously bring about a partial crosslinking of the layer.

11. Process according to claim 6, characterized in that the grafting monomer is styrene, so that the functionalization treatment is a chlorosulphonation treatment.

12. Process for the preparation of an organomineral semipermeable membrane according to any one of the claims 1 to 5, characterized in that it comprises the following stages:
a) subjecting a porous inorganic material support incorporating an inorganic material macroporous substrate coated with an inorganic material microporous layer having a mean pore radius below 10nm, to a treatment making it possible to reduce the penetration of a solution or a suspension into the pores of the inorganic material microporous layer;
b) contacting the microporous layer of the porous support with a solution or a suspension of the vinylidene fluoride polymer or copolymer having functional groups, in order to deposit on said microporous layer a layer of the solution or suspension and
c) drying the solution or suspension layer deposited in this way in order to form on said microporous layer of the porous support an organic layer based on vinylidene fluoride polymer or copolymer with a thickness of 0.01 to 1 μm and having functional groups giving the layer a water-selective permeability.

13. Process according to claim 12, characterized in that the polymer or copolymer having the functional groups is obtained by grafting a monomer having functional groups.

14. Process according to claim 12, characterized in that the polymer or copolymer having the functional groups is obtained by grafting onto a vinlyidene fluoride polymer or copolymer a monomer which can be functionalized and by then subjecting the thus obtained grafted polymer or copolymer to a treatment for introducing the functional groups onto the grafted monomer.

15. Process according to claim 12, characterized in that the copolymer having the functional groups is a copolymer of vinylidene fluoride and a monomer having functional groups.

**Patentansprüche**

1. Semipermeable organo-mineralische Membran, welche eine poröse inorganische Stütze umfaßt, die mit einer organischen semipermeablen Schicht versehen ist, wobei die Stütze ein makroporöses Substrat aus inorganischem Material umfaßt, das mit einer mikroporösen Schicht aus inorganischem Material versehen ist, dadurch gekennzeichnet, daß die mikroporöse Schicht aus inorganischem Material einen mittleren Porenradius kleiner 10nm hat, und daß die organische semipermeable Schicht eine dichte Schicht auf der Basis eines Polymers oder Copolymers von Vinylflurid ist, welches funktionelle Gruppen umfaßt, die der Membran eine selektive Permeabilität gegenüber Wasser verleihen, und eine Dicke von 0,01 bis 1 μm hat.

2. Membran gemäß Anspruch 1, dadurch gekennzeichnet, daß das makroporöse Substrat aus inorganischem Material ist, das aus der Gruppe ausgewählt ist, welche die Metalloxide, die Metalle, die Metallkarbide, die Siliziumkarbid und Karbon umfaßt, und daß die mikroporöse Schicht aus einfachem oder gemischtem Oxid oder Metallhydroxid ausgeführt ist.

3. Membran gemäß einem der Ansprüche 1 oder 2, dadurch gekennzeichnet, daß das Polymer oder Copolymer aus Vinylflurid implantierte Makromolekülketten umfaßt, welche die besagten funktionellen Gruppen tragen.

**4.** Membran gemäß Anspruch 3, dadurch gekennzeichnet, daß die organische Schicht aus dem Polymer oder Copolymer des Vinylflurids gebildet wird, das Styrol implantiert hat, welches chlorsulfonierte oder sulfonierte Gruppen umfaßt.

**5.** Membran gemäß einem der Ansprüche 1 bis 2, dadurch gekennzeichnet, daß die organische Schicht aus einem Copolymer von Vinylflurid gebildet wird, das funktionelle Gruppen umfaßt, die der Membran eine selektive Permeabilität gegenüber Wasser verleihen.

**6.** Verfahren zur Herstellung einer semipermeablen organo-mineralischen Membran gemäß einem der Ansprüche 1 bis 4, dadurch gekennzeichnet, daß es die folgenden Abschnitte umfaßt:

a) eine poröse Stütze aus inorganischem Material, welche ein makorporöses Substrat aus inorganischem Material umfaßt, das mit einer mikroporösen Schicht aus inorganischem Material versehen ist, das einen mittleren Porenradius kleiner 10 nm hat, einer Bearbeitung unterziehen, die es ermöglicht, das Eindringen einer Lösung oder einer Suspension in die Porösität der mikroporösen Schicht des inorganischen Materials zu verringern,

b) die mikroporöse Schicht der porösen Stütze mit einer Lösung oder einer Suspension eines Polymers oder eines Copolymers von Vinylflurid in Kontakt bringen, um auf der mikroporösen Schicht der porösen Stütze eine Schicht der Lösung oder der Suspension abzuscheiden,

c) Trocknen der somit abgeschiedenen Lösungs- oder Suspensionsschicht, um auf dieser mikroporösen Schicht der porösen Stütze eine organische Schicht von 0,01 bis 1 $\mu$m Dicke auf der Basis des Polymers oder Copolymers von Vinylflurid zu bilden,

d) Implantieren von mindestens einem Monomer auf der organischen Schicht des Polymers oder Copolymers, welches mindestens eine ungesättigte Ethylengruppe umfaßt, und

e) anschließend Unterziehen der organischen implantierten Polymerschicht einer Behandlung zur Funktionalisierung um auf den implantierten Monomeren funktionelle Gruppen einzuführen, welche die Schicht mit einer selektiven Permeabilität gegenüber Wasser versehen.

**7.** Verfahren gemäß Anspruch 6, dadurch gekennzeichnet, daß das Monomer aus einer Gruppe ausgewählt wird, welche Acrylamid, Acrylamin, Styrol, Benzoldivinyl, die Vinylpyridene, N-Vinylpyrrolidon, N-Vinylcaprolacton, Vinylessigsäure, Vinylschwefelsäure, Acrylsäure, die Allylether und ihre Derivate umfaßt.

**8.** Verfahren gemäß einem der Ansprüche 6 und 7, dadurch gekennzeichnet, daß man das Implantieren auf radiochemischem Weg ausführt.

**9.** Verfahren gemäß Anspruch 8, dadurch gekennzeichnet, daß man das Implantieren ausführt, indem man die Stütze, die mit der Polymer- oder Copolymerschicht versehen ist, einer Bestrahlung mittels ionisierender Strahlungen aussetzt und indem man die somit bestrahlte organische Schicht mit den zu implantierenden Monomeren sowohl während als auch nach der Bestrahlung in Kontakt bringt.

**10.** Verfahren gemäß einem der Ansprüche 6 bis 8, dadurch gekennzeichnet, daß man auf der mikroporösen Schicht der in Abschnitt a) behandelten Stütze eine Schicht der Lösung oder Suspension des Polymers oder Copolymers, welches die zu implantierenden Monomere enthält, abscheidet und daß man anschließend die so abgeschiedene Schicht einer Bestrahlung mittels ionisierender Strahlungen unterzieht, um die Monomere auf dem Polymer oder Copolymer zu implantieren und gleichzeitig eine teilweise Vernetzung der Schicht hervorzurufen.

**11.** Verfahren gemäß Anspruch 6, dadurch gekennzeichnet, daß das zu implantierende Monomer Styrol und die Behandlung zur Funktionalisierung eine chlorsulfonierende Behandlung ist.

**12.** Verfahren zur Herstellung einer semipermeablen organo-mineralischen Membran gemäß einem der Ansprüche 1 bis 5, dadurch gekennzeichnet, daß es die folgenden Abschnitte umfaßt:

a) eine poröse Stütze aus inorganischem Material, welche ein makroporöses Substrat aus inorganischem Material umfaßt, das mit einer mikroporösen Schicht aus inorganischem Material versehen ist, die einen mittleren Porenradius kleiner 10 nm hat, einer Behandlung zu unterziehen, welche es ermöglicht, das Eindringen einer Lösung oder einer Suspension in die Porösität der mikroporösen Schicht aus inorganischem Material zu verringern,

b) die mikroporöse Schicht der porösen Stütze mit einer Lösung oder einer Suspension des Polymers oder Copolymers von Vinylflurid, welches funktionelle Gruppen umfaßt, in Kontakt bringen, um auf dieser mikroporösen Schicht eine Schicht der Lösung oder der Suspension abzuscheiden, und

c) Trocknen der so abgeschiedenen Lösungs- oder Suspensionsschicht, um auf dieser mikroporösen Schicht der porösen Stütze eine organische Schicht auf der Basis des Polymers oder Copolymers von Vinylflurid mit einer Dicke von 0,01 bis 1 $\mu$m zu formen, welche die funktionellen Gruppen umfaßt, die der Schicht eine selektive Permeabilität gegenüber Wasser verleihen.

13. Verfahren gemäß Anspruch 12, dadurch gekennzeichnet, daß das Polymer oder Copolymer, welches die funktionellen Gruppen umfaßt, durch Implantieren eines Monomers, das die funktionellen Gruppen umfaßt, erhalten wird.

14. Verfahren gemäß Anspruch 12, dadurch gekennzeichnet, daß das Polymer oder Copolymer, welches die funktionellen Gruppen umfaßt, erhalten wird, indem man auf einem Polymer oder Copolymer von Vinylflurid ein Monomer implantiert, das dazu fähig ist, funktionalisiert zu werden und indem man anschließend das so erhaltene implantierte Polymer oder Copolymer einer Behandlung unterzieht, um die funktionellen Gruppen auf dem implantierten Monomer einzuführen.

15. Verfahren gemäß Anspruch 12, dadurch gekennzeichnet, daß das Copolymer, welches die funktionellen Gruppen umfaßt, ein Copolymer von Vinylflurid und von einem Monomer ist, welches die funktionellen Gruppen umfaßt.